# EUROPEAN PATENT SPECIFICATION

(11) **EP 4 204 710 B1**
(45) Date of publication and mention of the grant of the patent: **14.10.2026**
(21) Application number: 20963821.2
(22) Date of filing: 31.12.2020
(51) Int. Cl.: F16F 9/02, F16F 9/36

(54) **SEALED CAP ASSEMBLY IN SUSPENSION AIR SPRINGS**
ABGEDICHTETE KAPPENANORDNUNG IN LUFTFEDERUNG
ENSEMBLE BOUCHON SCELLÉ DANS DES RESSORTS PNEUMATIQUES DE SUSPENSION

(43) Date of publication of application: 05.07.2023
(73) Proprietor: A.I.R.SÜSPANSIYON SISTEMLERI SANAYI VE TICARET ANONIM SIRKETI, Bursa (TR)
(72) Inventor: ÜLGÜR, Engin, Nilüfer/Bursa (TR)
(74) Representative: Yamankaradeniz, Kemal
(86) International application number: PCT/TR2020/051491
(87) International publication number: WO 2022/146264

(56) References cited:
- CN-A- 103 242 569
- DE-A1- 1 430 515
- DE-B- 1 145 863
- JP-A- H0 763 236
- KR-A- 20070 022 347
- KR-B1- 100 368 337
- TR-U- 200 703 066
- US-A- 4 108 423
- US-A- 5 437 436
- US-A1- 2013 146 408

## Description

### Technical Field

The invention relates to suspension mechanisms that affect comfort and roadholding in vehicles.

The invention particularly relates to the novelties realized in a cap, which is one of the parts forming the suspension mechanism in suspension air springs.

### Present State of the Art

Nowadays, suspension air springs are used in many different areas and for different purposes. The suspension air springs are usually used as suspension elements under the vehicle. It can be used in different vehicles in the automotive sector and provides important technical advantages in the vehicle it is used such as load carrying, comfort and driving comfort and roadholding. It can be positioned in the lower axle shaft section in the vehicles, also under the cabin or in the driver's seats in heavy vehicles. Said suspension air springs are also used as suspension elements in Truck cabins.

Suspension air springs' also used in the industrial applications, it particularly dampens the vibrations that occur in the machines such as textile machines, laboratory devices etc. Furthermore, it can be used instead of pneumatic cylinders in the industrial applications so as to lift weight, to give angular, vertical, or horizontal motion.

In another prior art method, support caps are used on the upper sections of the suspension air springs, which have a protective task. In the present state of the art, these support caps are manufactured by covering with rubber after forming the metal. When the air springs extends by filling air inside, it is supported by leaning on this cap. This cap also limits the extension of the rubber-based air springs without giving damage to the same.

The cap used in the present state of the art, leakage problem is seen in the finished product due to offsets in the concentricity during its assembly to the shock absorber.

In another prior art method, sealing is ensured from the connection bushing with rubber attached to the damper shaft end. The inclination of the damper shaft can be 4.5 degrees. A serious load is placed on the damper shaft. Thus, the economic life of the damper shaft is reduced.

As a result of the research made on the subject, document numbered TR2012/13224, titled suspension edge is encountered. The relevant application relates to suspension chocks that can be used instead of springs in vehicles; preferably have rubber parts that contribute to damping. The aim of the application is to provide a rubber suspension chock that provides a wide range in the selection of damping and elongation values and contributes to the improvement of the vehicle dynamics by comprising rubber layers that are resistant to deterioration caused by separation of the rubber part and metal material and are made of different raw materials. In the application, the cap assembly connected to the damper shaft is not disclosed, and there are no elements that would provide sealing.

US5437436A relates to a self-contained gas spring that has low heat generation characteristics and is easy to manufacture and maintain. The spring includes a bearing and seal assembly that is easy to remove from the cylinder body of the spring. The assembly includes an annular bearing for guiding the piston rod, the bearing is press fit within a bearing cap and, an end cap threaded in to the cylinder body. The end cap includes an annular seal surrounding and tightly engaging the piston rod of the gas spring. The end cap engages the bearing cap when the end cap is fully threaded into the cylinder body to retain the bearing cap within the cylinder body. The seal is formed of two materials, one very flexible, the other very rigid. The gas spring has a piston head that has a hexagonal periphery with upwardly angled sides.

As a result, due to the abovementioned disadvantages and the insufficiency of the current solutions regarding the subject matter, a development is required to be made in the relevant technical field.

### Aim of the Invention

The invention aims to solve the abovementioned disadvantages by being inspired from the current conditions.

The main aim of the invention is to prevent the air leakage problem in the cap mounting area of the suspension air springs.

Another aim of the invention is to provide a longer and more efficient use of the suspension air springs.

Another aim of the invention is to provide simplicity in the assembly of the suspension air springs group to the damper shaft.

Another aim of the invention is to provide sealing on the damper shaft and prevent the damper shaft from breaking.

Another aim of the invention is to increase the resistance of the damper shaft against lateral forces, thus preventing it from breaking and increasing its economic life.

Another aim of the invention is to eliminate the use of further parts by vulcanizing the rubber directly to the cap in the production of the cap assembly.

Another aim of the invention is to ensure the rubber region to adhere on a larger area by means of vulcanizing the rubber directly to the cap in the production of the cap assembly and thus to achieve more sealing.

The structural and characteristic features of the present invention will be understood clearly by the following drawings and the detailed description made with reference to these drawings and therefore the evaluation shall be made by taking these figures and the detailed description into consideration.

### Figures Clarifying the Invention

**Figure 1** is a sectional view of the inventive cap assembly.
**Figure 2** is a perspective disassembled view of the inventive cap assembly.
**Figure 3** is a side view of the inventive cap assembly.
**Figure 4****,** is a perspective disassembled view of the inventive cap assembly in the present state of the art
**Figure 5****,** is a side view of the inventive cap assembly in the present state of the art.

### Description of the Part References

**10.** Cap assembly
**11.** Rubber section
**12.** O-Ring
**13.** Bearing band
**14.** Cavity
**15.** Body
**16.** Bushing
**20.** Damper shaft

### Detailed Description of the Invention

In this detailed description, the preferred embodiments of the inventive cap assembly (10) are described by means of examples only for clarifying the subject matter.

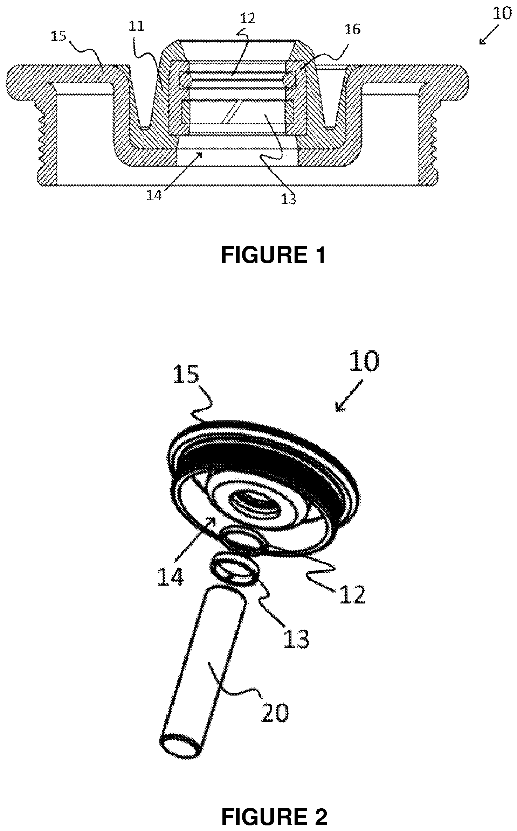

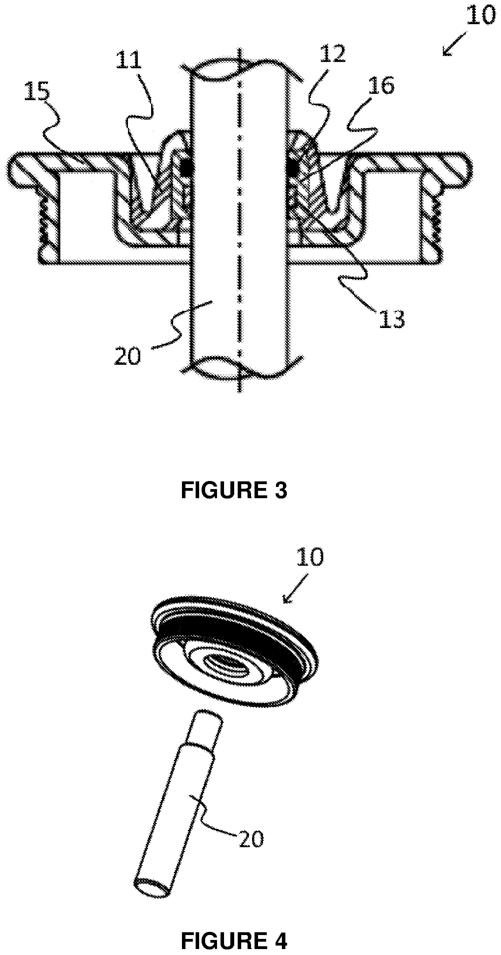

As shown in Figures 2 and 3, the invention relates to a cap assembly (10) that is used in the suspension systems of the heavy vehicles, positioned on the air springs and damper shaft (20) and has a body (15) with a cavity (14) therein. The body (15) forming the cap assembly (10) is preferably made of metal material.

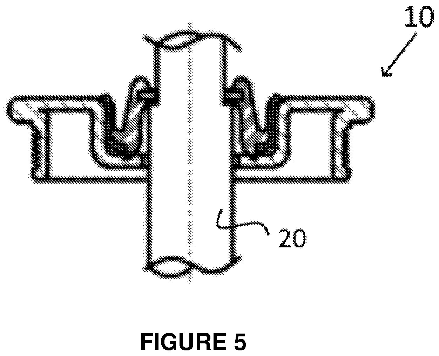

In Figures 4 and 5, a cap assembly (10) of the present state of the art is seen. The o-o-ring (12) that provides sealing and the bearing band (13) is not present in the cap assembly (10) in the present state of the art.

As a distinctive property, the cap assembly (10) comprises, at least one o-o-ring (12) that is positioned in the cavity (14) of the body (15) and provides sealing, at least one bearing band (13) that guides the damper shaft (20) positioned in the cavity (14) of the body (15) to the body (15), at least one bushing (16) that is adapted on the body (15) by vulcanization method and a rubber section (11). As shown in Figure 1, firstly the o-o-ring (12) and then the bearing band (13) are mounted to the body (15).

Sealing is provided on the damper shaft (20). The damper shaft (20) can be tilted at 4.5 degrees at 360 degrees diameter. Both sealing is provided on the damper shaft (20) and breakage of the damper shaft (20) is eliminated. In this way, the damper shaft (20) can provide more resistance to the lateral forces.

The bushing (16) is positioned to the damper shaft (20) with the bearing band (13), the o-ring (12) and the rubber to provide impermeability. The bearing band (13) and the o-ring (12) are positioned in the predetermined area inside the bushing (16). The bushing (16) is fixed inside the cap assembly (10) with the rubber by vulcanization method. The lateral forces and dimensional misalignments and deviations from concentricity are prevented during use, by assembling the o-ring (12), bearing band (13) and cap assembly (10) to the damper shaft (20). Therefore, the sealing problem in the finished product is eliminated. Preferably the element known in the market as an O-ring is used as the o-ring (12).

A rubber section (11) that adheres to a wider area on the body (15) and has a higher strength is formed by vulcanizing the rubber directly to the cap assembly (10).

The invention is a method that provides sealing in the assembly of the cap assembly (10) that is used in the suspension systems of the heavy vehicles, positioned on the air springs and damper shaft (20) and has a body (15) with a cavity (14) therein, to the damper shaft (20), it is provided with the following process steps;
a- applying surface treatment on the body (15) so as to join the rubber and the body (15),
b- forming the rubber section (11) by combining the body (15) and the rubber by vulcanization method,
c- positioning the bushing (16) in the body (15) cavity (14),
d- positioning the o-ring (12) inside the bushing (16),
e- positioning the bearing band (13) inside the bushing (16).

## Claims

1. A method that provides sealing in an assembly of a cap assembly (10) that is used in suspension systems of heavy vehicles, positioned on air springs and a damper shaft (20) and has a body (15) with a cavity (14) therein, to the damper shaft (20), comprising process steps of :
applying surface treatment on the body (15) so as to join rubber and the body (15),
• forming a rubber section (11) by combining the body (15) and the rubber by vulcanization method,
• positioning an o-ring (12) inside a bushing (16),
• positioning a bearing band (13) inside the bushing (16)
• positioning the bushing (16) in the cavity (14) of the body (15) after the process step of forming the rubber section (11) by combining the body (15) and the rubber by vulcanization method.

## Patentansprüche

1. Verfahren, das Abdichtung in einer Anordnung einer Kappenanordnung (10) bereitstellt, die in Aufhängungssystemen von Schwerfahrzeugen verwendet wird, an Luftfedern und einer Dämpferwelle (20) positioniert ist und einen Körper (15) mit einem Hohlraum (14) darin, zu der Dämpferwelle (20), aufweist, umfassend folgende Prozessschritte:
• Anwenden von Oberflächenbehandlung an dem Körper (15), um Gummi und den Körper (15) zu verbinden,
• Bilden eines Gummiabschnittes (11) durch Kombinieren des Körpers (15) und des Gummis durch Vulkanisationsverfahren,
• Positionieren eines O-Rings (12) innerhalb einer Buchse (16),
• Positionierung eines Lagerbands (13) innerhalb der Buchse (16),
• Positionieren der Buchse (16) in dem Hohlraum (14) des Körpers (15) nach dem Prozessschritt des Bildens des Gummiabschnittes (11) durch Kombinieren des Körpers (15) und des Gummis durch Vulkanisationsverfahren.

## Revendications

1. Procédé qui assure un scellage dans un ensemble d'un ensemble de bouchon (10) qui est utilisé dans des systèmes de suspension de véhicules lourds, positionné sur des ressorts pneumatiques et un arbre d'amortisseur (20) et présente un corps (15) avec une cavité (14) à l'intérieur, à l'arbre d'amortisseur (20), comprenant des étapes de processus de :
• application d'un traitement de surface sur le corps (15) de façon à joindre du caoutchouc et le corps (15),
• formation d'une section en caoutchouc (11) en combinant le corps (15) et le caoutchouc par un procédé de vulcanisation,
• positionnement d'un joint torique (12) à l'intérieur d'une douille (16),
• positionnement d'une bande de roulement (13) à l'intérieur de la douille (16),
• positionnement de la douille (16) dans la cavité (14) du corps (15) après l'étape de processus de formation de la section en caoutchouc (11) en combinant le corps (15) et le caoutchouc par un procédé de vulcanisation.
